# EUROPÄISCHE PATENTSCHRIFT

(11) **EP 1 654 472 B1**
(45) Veröffentlichungstag und Bekanntmachung des Hinweises auf die Patenterteilung: **18.04.2007**
(21) Anmeldenummer: 04740904.0
(22) Anmeldetag: 10.07.2004
(51) Int. Cl.: F16D 23/06, F16D 23/04

(54) **RASTELEMENT**
CLIP ELEMENT
ELEMENT D'ENCLIQUETAGE

(30) Priorität: 16.08.2003 DE 10337588
(43) Veröffentlichungstag der Anmeldung: 10.05.2006
(73) Patentinhaber: Schaeffler KG, 91074 Herzogenaurach (DE)
(72) Erfinder: SPOERL, Marcus, 91126 Rednitzhembach (DE); NURROHMAH, Novia, 90768 Fürth (DE)
(86) Internationale Anmeldenummer: PCT/EP2004/007641
(87) Internationale Veröffentlichungsnummer: WO 2005/019674

(56) Entgegenhaltungen:
- EP-A- 0 870 941
- EP-A- 1 298 340
- PATENT ABSTRACTS OF JAPAN Bd. 0072, Nr. 54 (M-255), 11. November 1983 (1983-11-11) & JP 58 137627 A (FUJI TEKKOSHO:KK), 16. August 1983 (1983-08-16)

## Beschreibung

### Gebiet der Erfindung

Die Erfindung betrifft ein Rastelement zum Verrasten zweier Getriebeteile in wenigstens einer Position, bestehend aus einem, in einem ersten Getriebeteil angeordneten, Gehäuse, in dem ein Federelement und ein Rastkörper vorgesehen sind, wobei das Federelement gegen ein zweites Getriebeteil vorgespannt ist und den Rastkörper im wesentlichen quer zu einer Bewegungsrichtung der beiden Getriebeteile mit einer Kraft beaufschlagt.

### Hintergrund der Erfindung

Es ist dem Fachmann bekannt, dass derartige Rastelemente in verschiedenen Anwendungen der Schaltgetriebe von Kraftfahrzeugen eingesetzt sind. Sie arretieren z. B. als Arretierungen bewegliche Getriebeelemente in Schalt- oder Wählpositionen, so dass diese Getriebeelemente, beispielsweise trotz Erschütterungen während des Fahrbetriebs, in den vorgegebenen Stellpositionen verbleiben. Derartige Getriebeelemente sind z. B. dreh- und längsverschiebbare Schaltwellen, längsverschiebbare Schaltschienen und schwenkbare Schaltbolzen. Die Arretierungen sind dabei gegen eine Rastkontur vorgespannt, deren Oberfläche in der Regel durch die Kontur eines Rastgebirges mit Erhöhungen und Vertiefungen beschrieben ist. In den vorgegebenen Wähl- bzw. Schaltpositionen verrastet die Arretierung in einer der Vertiefungen des Rastgebirges und hält das Getriebeelement in dieser Position. In der Vergangenheit war die Fachwelt bestrebt in handgeschalteten Getrieben, besonders für die letztgenannten Anwendungen, Arretierungen einzusetzen, bei denen in aufwändiger Weise längsbeweglich wälzgelagerte Arretierbolzen mit einer kugelgelagerten Arretierkugel in einem Gehäuse der Arretierung eingesetzt sind. Mit dem Einsatz derartig wälzgelagerter Arretierungen sollte und soll das von der Bedienperson am Handschalthebel beim Wählen und Schalten deutlich spürbare an der Oberfläche der gegen die Arretierung bewegten Getriebeelemente erzeugte Hakeln gemindert werden. Mit dem immer häufigeren Einsatz von hilfskraftbetätigten bzw. automatisierten Schaltgetrieben ist die Verwendung derartiger relativ kostspieliger Arretierungen oftmals nicht mehr notwendig. In ihrer Ausführung einfachere, jedoch robuste und kostengünstig herzustellende Arretierungen sind zunehmend gefragt.

Arretierungen sind weiterhin auch in den bekannten Schaltkupplungen vorgesehen, die für das drehfeste Verbinden von Gangrädern mit einer Getriebewelle beim Schalten von Gängen eingesetzt sind. Die Schaltmuffe dieser Schaltkupplungen ist auf dem Schaltmuffenträger zumeist in einer neutralen Position mittels einer Arretierung gehalten. In dieser Stellposition sind gegen die Schaltmuffe drei bis vier am Umfang des Schaltmuffenträgers angeordnete und an dem Schaltmuffenträger gehaltene Arretierungen vorgespannt. Dazu stützen sich die Arretierungen an dem Schaltmuffenträger ab und greifen in Rastvertiefungen an der Schaltmuffe. Weiterhin sind in als Synchronkupplung ausgebildeten Schaltkupplungen auch Rastelemente in Form von Druckstücken eingesetzt. Die Druckstücke sitzen längsverschiebbar in einem Schaltmuffenträger. Die in dieser Anwendung eingesetzten Arretierungen oder Druckstücke bzw. Kombinationen aus Arretierungen und Druckstücken sind relativ einfach gestaltet und unter anderem auch durch blattfederartige bzw. bügelartige flache Federelemente gebildet. Flache, bügelartig gestaltete Federelement sind gegenüber Schraubenfedern oftmals bevorzugt, da sie bei flacher Bauhöhe relativ viele Variationen in der Auslegung der Federcharakteristik zulassen. Der Schaltmuffenträger ist mit Aufnahmen geringer radialer Tiefe für diese Arretierungen versehen. Die Stabilität des Trägers, insbesondere die Steifigkeit seiner Körperstruktur ist aufgrund der Ausnehmungen geringer Tiefe nur relativ geringfügig nachteilig beeinflusst.

Ein Rastelement in Form eines Druckstücks der gattungsbildenden Art ist in EP 0 870 941 A1 oder EP 1298340 beschrieben. An einem Grundkörper aus Blech ist ein elastisches Federelement ausgebildet. Das elastische Federelement ist aus dem flachen Blech des Grundkörpers geformt, steht von dem Grundkörper ab und ist bügelartig gebogen. Der Grundkörper stützt sich an einem Schaltmuffenträger ab, wobei das Federelement gegen eine auf dem Schaltmuffenträger sitzende Schaltmuffe vorgespannt und in einer Rastvertiefung verrastet ist. Bei einer Schaltbewegung nimmt die Schaltmuffe das Druckstück zunächst in Richtung des zu schaltenden Gangrades längs mit, wodurch der bekannte Synchronisationsprozess eingeleitet ist. Größerer axialer Widerstand auf das Rastelement bei weiter in Richtung des Gangrades längsbewegter Schaltmuffe zwingt das Federelement aus der Rastvertiefung an der Schaltmuffe in Richtung des Grundkörpers einzufedern. Das Federelement schnappt wieder in die Rastvertiefung ein, wenn die Schaltmuffe in die neutrale Stellposition zurückgeführt wird. Nachteilig an der an sich zufriedenstellenden Lösung ist, dass das Rastelement, insbesondere wenn diese auch als Druckstück eingesetzt ist, nicht robust genug für den Einsatz in automatisierten Schaltgetrieben ist. Die Schaltung ist beispielsweise elektromotorisch betätigt. Dabei findet der Synchronisations- und Schaltvorgang vergleichsweise zu handkraftbetätigten Schaltvorgängen in wesentlich kürzeren Zeiträumen und ohne das durch die Bedienperson üblicherweise aufgebrachte Feingefühl statt. Die Einzelteile der Schaltkupplung treffen z. B. schlagartig aufeinander, wodurch das aus Federstahl gefertigte Rastelement gefährdet ist.

### Zusammenfassung der Erfindung

Die Aufgabe der Erfindung ist es, ein Rastelement in Form eines Druckstücks oder einer Arretierung zu schaffen, das robust ist, bei dem die Vorteile des Einsatzes von flachen Federelementen berücksichtigt sind und das sich kostengünstig herstellen lässt.

Diese Aufgabe ist nach dem Gegenstand des kennzeichnenden Teils des Anspruchs 1 dadurch gelöst, dass das Gehäuse mit einem Boden, einem Deckel und mindestens zwei ersten Seitenwänden im wesentlichen quaderförmig ausgeführt ist, wobei die ersten Seitenwände parallel zueinander und längs der Druckrichtung ausgerichtet sind. Der Deckel verbindet die oberen Kanten der beiden ersten Seitenwände, liegt quer zur Druckrichtung und ist mit einer Aussparung versehen. Der Boden ist an den unteren Enden der ersten Seitenwände angebracht, erstreckt sich zumindest teilweise zwischen ihnen und liegt quer zur Druckrichtung. Das Federelement ist als Blattfeder ausgebildet, die sich an dem Boden und dem Deckel des Gehäuses abstützt. Der Rastkörper ist einteilig mit dem Federelement ausgeführt, wobei er durch die Aussparung im Deckel des Gehäuses hindurch greift.

Durch das quaderförmige Gehäuse bestehend aus einem Deckel, einem Boden und mindestens zwei Seitenwänden und dem Umstand, dass der einteilig mit dem Federelement ausgeführte Rastkörper durch eine Aussparung des Deckels hindurch greift, ist die Druckfeder in der Arretierung eingekapselt. Das Gehäuse schützt während des Schaltprozesses das Federelement vor Kräften, die sich nachteilig auf die Lebensdauer und Funktion des Federelementes auswirken könnten. Das ist insbesondere dann von Vorteil, wenn die Rastelemente als Druckstücke in den vorgenannten Schaltkupplungen mit Synchronisationen eingesetzt sind. Der Rastkörper ist einteilig mit dem Federelement ausgeführt und läuft an der Rastkontur des Rastgebirges bzw. an der Verzahnung der Schaltmuffe ab bzw. verrastet in den dafür bestimmten Rastvertiefungen der Schaltmuffe.

Die relativ kleinen und bei ihrer Montage unhandlichen Federelemente sind verliersicher in dem Rastelement richtungsorientiert gehalten und damit einfacher und sicherer zu montieren. Das Gehäuse und das Federelement sind separat gefertigte Einzelteile. In das Gehäuse sind, bei unveränderter Abmessung der Hülle, Federelemente mit den unterschiedlichsten Federcharakteristiken einsetzbar. Damit ist das Rastelement bei gleicher Außenabmessung an die unterschiedlichsten anwendungsspezifischen Anforderungen anpassbar. Mit einer derartigen Mehrfachverwendung des Gehäuses einer Abmessung in verschiedenen Anwendungen eines oder mehrerer Getriebe sind die Kosten für die Herstellung des Rastelementes und der Aufwand für Verpackung, Transport und Logistik so gering wie möglich gehalten.

Weiterhin kann die Blattfeder aus drei flächigen Abschnitten bestehen, wobei der erste und der zweite Abschnitt quer zur Druckrichtung verlaufen und am Boden bzw. am Deckel des Gehäuses anliegen und der dritte Abschnitt in Druckrichtung verläuft, an einer der ersten Seitenwände anliegt und die anderen Abschnitte verbindet.

Außerdem kann ein vierter Abschnitt der Feder, ausgehend von dem freien Ende des ersten Abschnittes, in Richtung des zweiten Abschnittes verlaufen, an diesem anliegen und es mit einer Kraft in Druckrichtung beaufschlagen. In einer weiteren Ausführungsform der Erfindung besteht das Federelement aus einem ersten, einem dritten und mindestens einem fünften flächigen Abschnitt, wobei der erste und der dritte Abschnitt quer zur Druckrichtung verlaufen und am Boden bzw. am Deckel des Gehäuses anliegen und die fünften flächigen Abschnitte zwischen ihnen so angeordnet sind, dass das Federelement ziehharmonikaartig ausgeführt ist.

Durch diese Ausführungen des Federelementes aus flächigen Abschnitten, wobei eines am Boden, eines am Deckel und anliegt und von den restlichen verbunden werden, werden keine Vorrichtungen zum Zentrieren oder Halten des Federelementes benötigt. Das Federelement kann den Abmessungen des Gehäuses angepasst werden, wodurch es bei der Montage nur in das Gehäuse eingelegt werden muss und sich dabei selbsttätig positioniert. Dadurch wird der Montageaufwand erheblich erniedrigt.

Durch den zusätzliche flächigen Abschnitt, bzw. den ziehharmonikaartig ausgeführten flächigen Abschnitten kann auf einfachem Weg die Kraft, die der Rastkörper auf ein zweites Getriebeteil ausübt, erhöht und den Erfordernissen entsprechend angepaßt werden.

Zusätzlich können mehrere in Reihe geschaltete Federelemente verwendet werden, was ebenfalls zu einer einfachen Anpassung der Anpresskraft führt.

Außerdem kann der Rastkörper als eine in die Blattfeder eingebrachte kalottenförmige Erhebung ausgeführt sein.

Durch den Einsatz einer gekrümmten Oberfläche als Rastkörper wird sowohl die Reibung zwischen Rastelement und Getriebeteil minimiert, als auch einem Verhaken vorgebeugt, was vorzeitigem Verschleiß und einer Lebensdauerverkürzung der Elemente vorbeugend entgegenwirkt.

In einer vorteilhaften Weiterbildung der Erfindung ist das Gehäuse mit zwei zweiten Seitenwänden versehen, die parallel zueinander angeordnet sind, senkrecht zum Boden und zu den ersten Seitenwänden stehen und sich von den Kanten des Deckels zumindest teilweise in Richtung des Boden erstrecken.

Die zweiten Seitenwände schließen die bestehende Öffnungen in dem Gehäuse zumindest teilweise. Dabei erstrecken sie sich vom Deckel des Gehäuses in Richtung des Bodens. Dadurch wird das Federelement im Gehäuse eingekapselt und ist somit verliersicher vormontiert.

Das Gehäuse bestehend aus dem Deckel, dem Boden und den Seitenwänden ist vorzugsweise einteilig ausgeführt und wird vorteilhafterweise in einem spanlosen Umformprozeß aus Blechteilen gefertigt. Denkbar ist auch eine Ausführung des Gehäuses aus Kunststoff.

Die einteile Ausführung des Gehäuses und der Umstand, dass das Rastelement somit nur zweiteilig (Gehäuse und Federelement) ausgebildet ist führt zu einer erheblichen Vereinfachung der Montage und damit zu einer kostengünstigen Produktion. Weiterhin führt der Einsatz von spanlos hergestellten Blechumformteilen in der Großserien- und Massenproduktion des Gehäuses zu einer erheblichen Kostenreduktion. Der Einsatz von Kunststoff bei der Fertigung des Gehäuses führt des weiteren zu einer Gewichtsreduktion.

### Kurze Beschreibung der Zeichnungen

Weitere Merkmale der Erfindung ergeben sich aus der nachfolgenden Beschreibung und aus den Zeichnungen, in denen ein Ausführungsbeispiel der Erfindung vereinfacht dargestellt ist. Es zeigen:
- Figur 1: einen Längsschnitt durch ein erfindungsgemäßes Rastelement,
- Figur 2: einen Querschnitt eines erfindungsgemäßen Rastelements nach der Linie II-II aus Figur 1,
- Figur 3: einen Längsschnitt durch eine weitere Ausführungsform eines erfindungsgemäßen Rastelementes,
- Figur 4: Längsschnitt einer Arretierung einer Schaltstange mit einem erfindungsgemäßen Rastelement,
- Figur 5: Längsschnitt einer Synchronkupplung mit einem erfindungsgemäßen Rastelement.

### Ausführliche Beschreibung der Zeichnungen

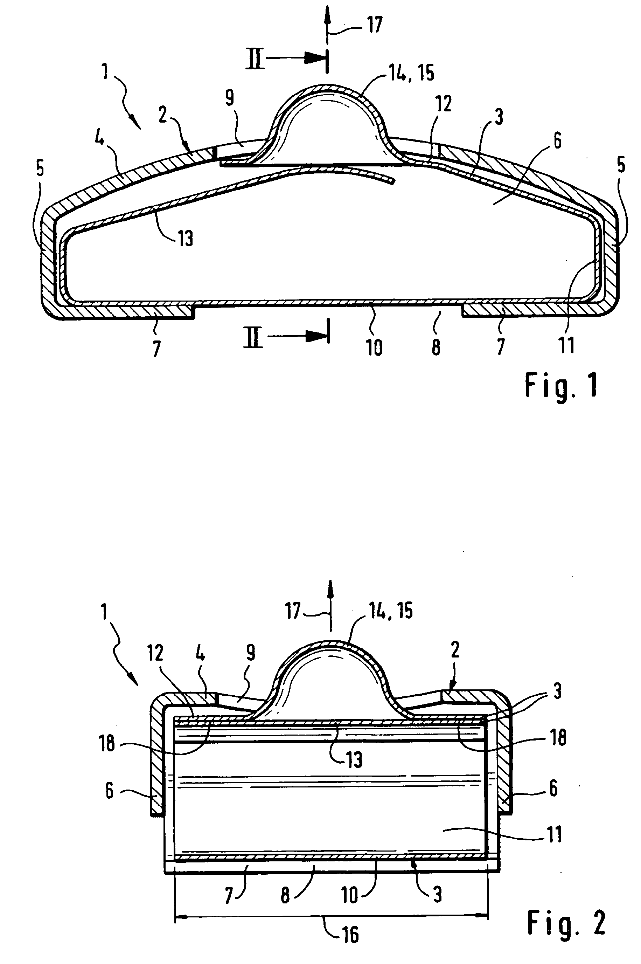

In Figur 1 und Figur 2 ist mit 1 ein Rastelement bezeichnet, welches aus einem Gehäuse 2 und einem Federelement 3 besteht. Das Gehäuse 2 ist einteilig und im wesentlichen quaderförmig ausgeführt. Es besteht aus einem Deckel 4, zwei ersten Seitenwänden 5, zwei zweiten Seitenwänden 6 und einem Boden 7. Der Deckel 4 des Gehäuses 2 liegt im wesentlichen quer zur Druckrichtung 17 und ist in der Draufsicht rechteckig ausgeführt. An gegenüberliegenden Kanten, im vorliegenden Ausführungsbeispiel den Kanten kürzerer Abmessung, des Deckel 4 schließen sich die parallel zueinander stehenden und entlang der Druckrichtung des Rastelements 17 verlaufenden ersten Seitenwände 5 an. An den dem Deckel abgewandten Enden der ersten Seitenwände 5 ist ein Boden 7 angebracht der sich zumindest teilweise zwischen diesen Enden erstreckt. In dem vorliegenden Ausführungsbeispiel ist der Boden 7 mit einer Aussparung 8 versehen, wodurch das Gewicht des Rastelements 1, im Vergleich zu einem sich über die ganze Fläche erstreckenden Boden, minimiert wird. Der Deckel 9 des Rastelements 1 ist ebenfalls mit einer Aussparung 9 versehen. Diese liegt im Zentrum des Deckels 4 und ist im vorliegenden Ausführungsbeispiel kreisförmig ausgebildet.

Das Federelement ist in Form einer gebogenen Blattfeder ausgebildet und innerhalb des Gehäuses angeordnet. Es setzt sich aus vier flächigen Abschnitten 10, 11, 12, 13 zusammen. Die flächigen Abschnitte 10, 11, 12, 13 sind im wesentlichen rechteckig ausgeführt und erstrecken sich über die gesamte innere Breite 16 des Gehäuses 2.

Ein erster flächiger Abschnitt 10 liegt am Boden 7 des Gehäuses 2 an. Dieses ist derart ausgeführt, dass es sich über die gesamte Strecke zwischen den ersten Seitenwänden 5 erstreckt. Von einer Kante des ersten flächigen Abschnittes 10, welche an einer der ersten Seitenwände 5 anliegt erstreckt sich ein zweiter flächiger Abschnitt 11 des Federelements 3 entlang der Richtung der ersten Seitenwand 5. Dieser zweite flächige Abschnitt 11 ist von seinen lateralen Abmessungen her denen der ersten Seitenwand 5 angepasst und mündet an der dem Boden 7 abgewandten Kante in einen dritten flächigen Abschnitt 12. Der dritte flächige Abschnitt 12 erstreckt sich innerhalb des Gehäuses 2 entlang des Deckels 4. Die Abmessungen des dritten flächigen Abschnittes 12 sind so gewählt, dass es sich ausgehend von der ersten Seitenwand 5 soweit erstreckt, dass es die Aussparung 9 überdeckt. Im Bereich der Aussparung 9 ist der dritte flächige Abschnitt 12 mit einer kalottenartigen Ausformung 14 versehen, die durch die Aussparung 9 hindurch greift und als Rastkörper 15 mit einer nicht dargestellten Rastkontur zusammenwirkt.

Der vierte flächige Abschnitt 13 schließt sich an die Kante des ersten flächigen Abschnittes 10 an, die dem zweiten flächigen Abschnitt 11 gegenüberliegt. Von dort aus erstreckt es sich Richtung des dritten flächigen Abschnittes 12. Im Bereich der kalottenförmigen Ausformung 14 berührt es den dritten flächigen Abschnitt 12 entlang einer Berührungslinie 18, die nur von der kalottenförmigen Ausformung unterbrochen wird. Der vierte flächige Abschnitt 13 ist im Bereich der Berührungslinie 18 gebogen ausgeführt.

Das Federelement 3 stützt sich mit seinem ersten flächigen Abschnitt 10 am Boden 7 des Gehäuses 2 ab. Dieser steht mit dem dritten flächigen Abschnitt 12 über den zweiten flächigen Abschnitt 11 in Kontakt. Das Federelement 3 ist so ausgeführt, dass der dritte flächige Abschnitt 12 gegen den Deckel 4 des Gehäuses 2 vorgespannt ist und somit mit einer Kraft in Druckrichtung beaufschlagt ist. Zusätzlich ist auch der vierte flächige Abschnitt 13 in Druckrichtung 17 vorgespannt wodurch eine zusätzliche Kraft auf den dritten flächigen Abschnitt 12 ausgeübt wird.

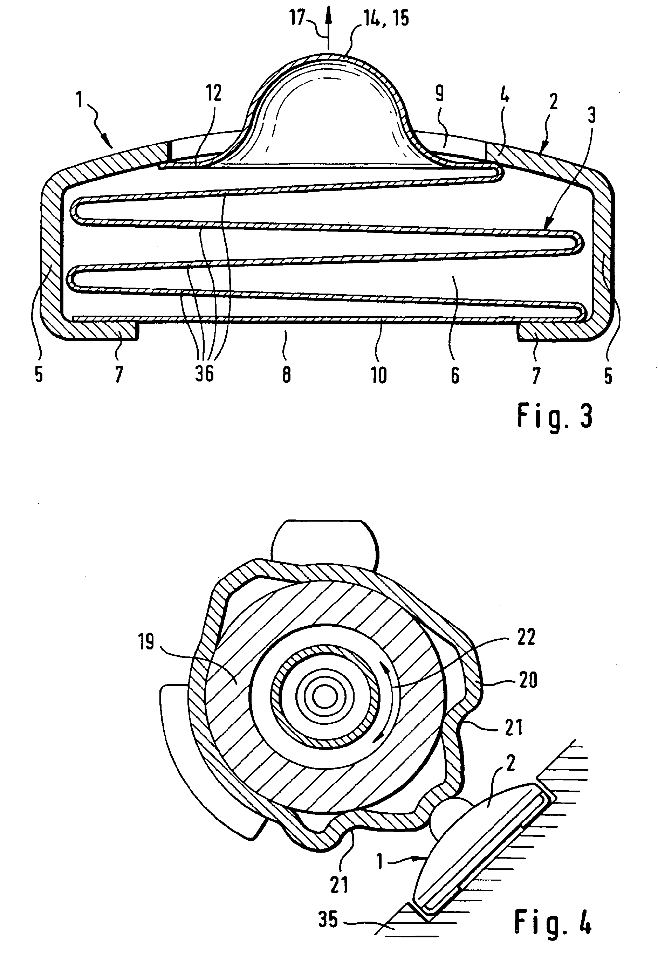

In Figur 3 ist eine weitere Ausführungsform eines erfindungsgemäßen Rastelementes 1 dargestellt. Es unterscheidet sich von der ersten Ausführungsform durch die Gestalt des Federelementes. Wegen der großen Ähnlichkeit zur ersten Ausführungsform wurden gleiche Teile mit gleichen Bezugszahlen bezeichnet. Das Federelement 3 besteht aus einem ersten 10, einem dritten 12 und vier fünften flächigen Abschnitten 36, wobei die Wahl der Anzahl "vier" keine Einschränkung bedeuten soll. Nötig ist mindestens ein fünftes flächiges Element. Der erste und der dritte Abschnitt 10, 12 verlaufen quer zur Druckrichtung 17 und liegen am Boden 7 bzw. am Deckel 4 des Gehäuses 2 an. Die fünften flächigen Abschnitte 36 sind zwischen ihnen so angeordnet, dass das Federelement 3 ziehharmonikaartig ausgeführt ist.

Figur 4 zeigt ein Anwendungsbeispiel eines erfindungsgemäßen Rastelementes 1 im Längsschnitt. Es ist eine Schaltstangenarretierung dargestellt. Mit 19 ist eine Schaltstange bezeichnet. Das Rastelement 1 wirkt mit einer Rastkontur 20 eines der Schaltstange 19 zusammen. An seinem bodenseitigen Ende des Gehäuses 2 ist das Rastelement 1 beispielsweise an einem Gehäuse 35 des Getriebes ortsfest angebracht. In der Ruhestellung wird die kalottenförmige Ausformung 14, über die Vorspannung der flächigen Abschnitte 10, 11, 12, 13 in eine Mulde 21 der Rastkontur 20 gepresst. In dieser Stellung steht die kalottenförmige Ausformung 14 maximal aus dem Deckel 4 des Gehäuses 2 hervor. Wird nun die Schaltstange 19 in Richtung des Pfeils 22 gedreht um eine Relativbewegung zum Rastelement 1 zu verursachen, fährt die Ausformung 14 ein Rastgebirge ab. Dadurch wird die Ausformung 14 entgegen der Druckrichtung 17 bewegt. Das daraus resultierende Stauchen des Federelementes ruft als Reaktion eine Rückstellkraft auf die Schaltstange 19 hervor, wodurch die Relativbewegung zwischen Rastelement 1 und der Schaltstange 19 nur ab einer gewissen Kraft in Drehrichtung erfolgen kann. Wird ein hinreichend großer Schwellwert für diese Kraft eingestellt, so kann sichergestellt werden, daß die derart arretierte Schaltstange, trotz Erschütterungen während des Fahrbetriebes, in der vorgegebenen Stellposition verbleibt. Analog kann das Rastelement 1 auch genutzt werden um die Schaltstange 19 gegen translatorische Bewegungen zu sichern

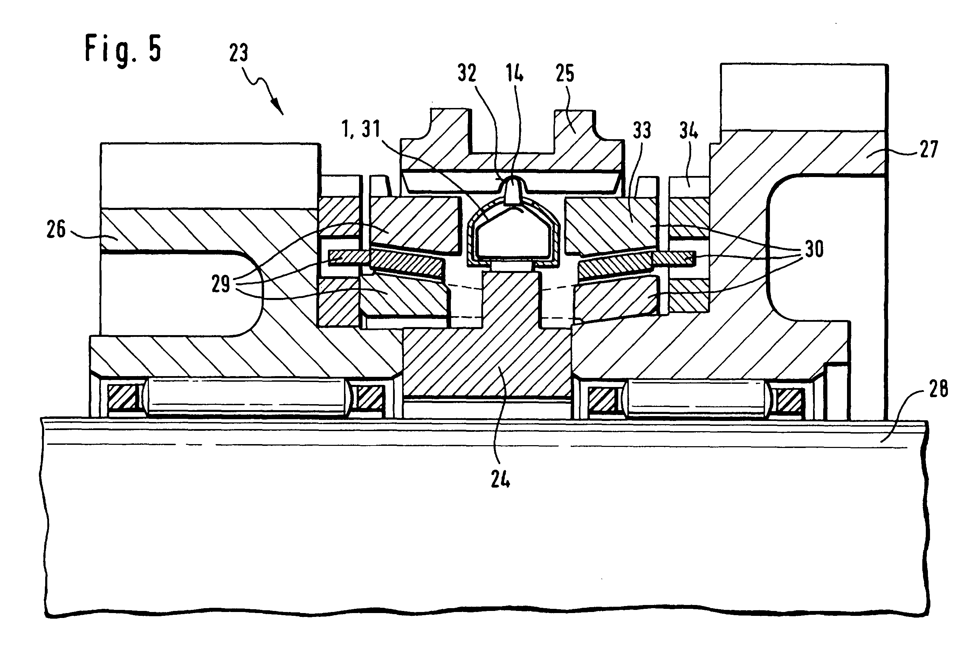

Die Figur 5 zeigt eine Synchronkupplung 23 bestehend aus einem Muffenträger 24 und einer Schaltmuffe 25 zum wahlweisen Kuppeln der Gangräder 26 und 27. Die Gangräder 26, 27 sind drehbar aber längs fest auf einer Schaltwelle 28 gelagert. Der Muffenträger 24 sitzt verdrehfest sowie längs fest auf der Schaltwelle 28 und trägt auf seinem Außenumfang die Schaltmuffe 25. Die Schaltmuffe 25 ist mittels einer Verzahnung drehfest zu dem Muffenträger 24 und damit zur Schaltwelle 28 aber längs wahlweise in Richtung eines der Gangräder 26 oder 27 verschiebbar auf dem Muffenträger 24 angeordnet. An jeder Seite des Muffenträgers 24 ist längs zwischen dem Muffenträger 24 und dem Gangrad 26, 27 jeweils ein Satz 29, 30 Synchronringe angeordnet.

Der Muffenträger 24 nimmt an seinem Umfang mindestens drei Rastelemente 1 auf. Das Rastelement 1 verrastet an der Schaltmuffe 25 in ihrer neutralen Stellposition. Das Rastelement 15 ist als ein Druckstück 31 ausgelegt. In der neutralen Stellposition stützt sich das Rastelement 1 an dem Muffenträger 24 radial ab und spannt mit seiner Ausformung 14 gegen die Schaltmuffe 25 vor. Dabei greift das Rastelement 1 mit der Ausformung 14 in eine Rastvertiefung 32 an der Schaltmuffe 2 ein.

Bei der Schaltbewegung der Schaltmuffe 25 in die geschaltete Position entlang der Richtung des Pfeiles 22 nimmt die Schaltmuffe 25 zunächst das in die Rastvertiefung 32 eingreifende Rastelement 1 längs mit und verschiebt das Rastelement 1 gegen den äußeren Synchronring 33 des Satzes 30. Der Prozess der Vorsynchronisation ist eingeleitet.

Die weiter in Richtung der Kupplungsverzahnung 34 bewegte Schaltmuffe 25 zwingt die Ausformung 14 des sich an dem äußeren Synchronring 33 abstützenden Druckstücks 31 aus der Rastvertiefung 32. Die Ausformung 14 federt dabei radial ein. Beim Lösen des Ganges bewegt sich die Schaltmuffe 25 entgegen der Richtung des Pfeiles 22 zurück in die neutrale Stellposition. Dabei greift die mit Vorspannung an der Schaltmuffe 25 anliegende Ausformung 14 erneut in die Rastvertiefung 32 ein.

Selbstverständlich können in Abwandlungen der Erfindung blattferartige Federelemente 3 kleinerer lateraler Abmessungen, insbesondere kleinerer Breiten oder unterschiedlicher Breiten und Formen benutzt werden.

Das Gehäuse 2 ist ein durch einen spanlosen Umformprozeß erzeugtes Blechteil. Dieses läßt sich in der Massenproduktion einfach und kostengünstig herstellen.

Das Rastelement1 besteht aus einem einteiligen Gehäuse 2 und einem einteiligen blattfederartigen Federelement 3. Die geringe Anzahl an Bauteilen senkt den Aufwand der Vormontage dieser Baugruppe beträchtlich im Vergleich zu Rastelementen mit federbeaufschlagten Rastierkugeln. Ein weiterer Vorteil ist, dass das Federelement 3 von dem Gehäuse 2 eingekapselt ist und dadurch verliersicher gehalten wird. Da sich das Federelement 3 über die gesamte innere Grundfläche des Gehäuses 2 erstreckt entfallen aufwändige und kostenintensive Positionierungs- und Haltemaßnahmen. Die Kapsellung des Federelementes 3 in ein Gehäuse schützt dieses vor schlagartig auftretenden Belastungen und wirkt auch einem Kippen oder Verdrehen des Federelementes 3 entgegen.

### Bezugszahlenliste

- 1: Rastelement
- 2: Gehäuse
- 3: Federelement
- 4: Deckel
- 5: erste Seitenwand
- 6: zweite Seitenwand
- 7: Boden
- 8: erste Aussparung
- 9: zweite Aussparung
- 10: erster flächiger Abschnitt
- 11: zweiter flächiger Abschnitt
- 12: dritter flächiger Abschnitt
- 13: vierter flächiger Abschnitt
- 14: Ausformung
- 15: Rastkörper
- 16: Breite
- 17: Druckrichtung
- 18: Berührungslinie
- 19: Schaltstange
- 20: Rastkontur
- 21: Mulde
- 22: Pfeil
- 23: Synchronkupplung
- 24: Muffenträger
- 25: Schaltmuffe
- 26: Gangrad
- 27: Gangrad
- 28: Schaltwelle
- 29: Satz
- 30: Satz
- 31: Druckstück
- 32: Rastvertiefung
- 33: äußerer Synchronring
- 34: Kupplungsverzahnung
- 35: Gehäuse
- 36: fünfter flächiger Abschnitt

## Patentansprüche

1. Rastelement (1) zum Verrasten zweier Getriebeteile in wenigstens einer Position, bestehend aus einem, in einem ersten Getriebeteil angeordneten, Gehäuse(2), in dem ein Federelement (3) und ein Rastkörper (15) vorgesehen sind, wobei das Federelement (3) gegen ein zweites Getriebeteil vorgespannt ist und den Rastkörper (15) im wesentlichen quer zu einer Bewegungsrichtung der beiden Getriebeteile mit einer Kraft beaufschlagt, **dadurch gekennzeichnet, dass**
- das Gehäuse (2) mit einem Boden (7), einem Deckel (4) und mindestens zwei ersten Seitenwänden (5) im wesentlichen quaderförmig ausgeführt ist, wobei
- die ersten Seitenwände (5) parallel zueinander und längs der Druckrichtung (17) ausgerichtet sind,
- der Deckel (4) die oberen Kanten der beiden ersten Seitenwände (5) verbindet, quer zur Druckrichtung (17) liegt und mit einer Aussparung (9) versehen ist,
- der Boden (9) an den unteren Enden der ersten Seitenwände (5) angebracht ist, sich zumindest teilweise zwischen ihnen erstreckt und quer zur Druckrichtung (17) liegt, das Federelement (3) als Blattfeder ausgebildet ist,
- die sich an dem Boden (7) und dem Deckel (4) des Gehäuses abstützt und
- der Rastkörper (15) einteilig mit dem Federelement (3) ausgeführt ist, wobei er durch die Aussparung (9) im Deckel (4) des Gehäuses (2) hindurch greift.

2. Rastelement (1) nach Anspruch 1, **dadurch gekennzeichnet, dass** das Federelement (3) aus drei flächigen Abschnitten besteht (10, 11, 12), wobei der erste und der dritte Abschnitt (10, 12) quer zur Druckrichtung (17) verlaufen und am Boden (7) bzw. am Deckel (4) des Gehäuses (2) anliegen und der zweite Abschnitt (11) in Druckrichtung (17) verläuft, an einer der ersten Seitenwände (5) anliegt und die anderen Abschnitte (10, 12) verbindet.

3. Rastelement (1) nach Anspruch 2, **dadurch gekennzeichnet, dass** ein vierter Abschnitt (13) des Federelementes (3) ausgehend von dem freien Ende des ersten Abschnittes (10) in Richtung des dritten Abschnittes (12) verläuft, an diesem anliegt und es mit einer Kraft in Druckrichtung (17) beaufschlagt.

4. Rastelement nach Anspruch 1, **dadurch gekennzeichnet, dass** das Federelement (3) aus einem ersten (10), einem dritten (12) und mindestens einem fünften flächigen Abschnitt (36) besteht, wobei der erste und der dritte Abschnitt (10, 12) quer zur Druckrichtung (17) verlaufen und am Boden (7) bzw. am Deckel (4) des Gehäuses (2) anliegen und die fünften flächigen Abschnitte (36) zwischen ihnen so angeordnet sind, dass das Federelement (3) ziehharmonikaartig ausgeführt ist.

5. Rastelement nach Anspruch 1, **dadurch gekennzeichnet, dass** mehrere in Reihe geschaltete Federelemente verwendet werden.

6. Rastelement nach Anspruch 1, **dadurch gekennzeichnet, dass** der Rastkörper (15) als eine in das Federelement (3) eingebrachte kalottenförmige Ausformung (14) ausgeführt ist.

7. Rastelement (1) nach Anspruch 1, **dadurch gekennzeichnet, dass** das Gehäuse (2) mit zwei zweiten Seitenwänden (6) versehen ist, die parallel zueinander angeordnet sind, senkrecht zum Boden (7) und zu den ersten Seitenwänden (5) stehen und sich von den Kanten des Deckels (4) zumindest teilweise in Richtung des Boden (7) erstrecken.

8. Rastelement (1) nach Anspruch 1, **dadurch gekennzeichnet, dass** das Gehäuse (2) bestehend aus dem Deckel (4), dem Boden (7) und den Seitenwänden (5, 6) einteilig ausgeführt ist.

9. Rastelement (1) nach Anspruch 1, **dadurch gekennzeichnet, dass** das Gehäuse (2) durch einen spanlosen Umformprozeß aus Blechteilen gefertigt ist.

10. Rastelement (1) nach Anspruch 1, **dadurch gekennzeichnet, dass** das Gehäuse (2) aus Kunststoff gefertigt ist.

## Claims

1. Detent element (1) for locking two transmission elements together at least in one position, said detent element (1) comprising a housing (2) arranged in a first transmission element, in which housing (2), a spring element (3) and a detent body (15) are disposed, the spring element (3) being biased against a second transmission element and applying a force to the detent body (15) substantially crosswise to a direction of movement of the two transmission elements, **characterised in that**
- the housing (2) is configured in a substantially cuboid shape with a bottom (7), a cover (4) and at least two first side walls (5),
- the first side walls (5) are parallel to each other and oriented along the pressure direction (17),
- the cover (4) connects the upper edges of the two first side walls (5), is situated crosswise to the pressure direction (17) and comprises an aperture (9),
- the bottom (7) is attached to the lower ends of the first side walls (5), extends at least partially between them and is situated crosswise to the pressure direction (17),
- the spring element (3) is configured as a leaf spring
- that is supported on the bottom (7) and on the cover (4) of the housing and
- the detent body (15) is configured in one piece with the spring element (3) and engages through the aperture (9) in the cover (4) of the housing (2).

2. Detent element (1) according to claim 1, **characterised in that** the spring element (3) is made up of three planar sections (10, 11, 12), the first and the third section (10, 12) extend crosswise to the pressure direction (17) and bear respectively against the bottom (7) and the cover (4) of the housing (2), and the second section (11) extends in pressure direction (17), bears against one of the first side walls (5) and connects the other sections (10, 12) to each other.

3. Detent element (1) according to claim 2, **characterised in that** a fourth section (13) of the spring element (3) extends, starting from the free end of the first section (10), towards the third section (12), bears against this and loads this with a force in pressure direction (17).

4. Detent element (1) according to claim 1, **characterised in that** the spring element (3) is made up of a first (10), a third (12) and at least one fifth planar section (36), the first and the third section (10, 12) extend crosswise to the pressure direction (17) and bear respectively against the bottom (7) and the cover (4) of the housing (2), and the fifth planar sections (36) are arranged between them in such a way that the spring element (3) has an accordion-like configuration.

5. Detent element (1) according to claim 1, **characterised in that** a plurality of spring elements are mounted in series.

6. Detent element (1) according to claim 1, **characterised in that** the detent body (15) is configured in the form of a semi-spherical convexity (14) made in the spring element (3).

7. Detent element (1) according to claim 1, **characterised in that** the housing (2) comprises two second side walls (6) that are arranged parallel to each other, perpendicular to the bottom (7) and to the first side walls (5) and extend from the edges of the cover (4) at least partially in the direction of the bottom (7).

8. Detent element (1) according to claim 1, **characterised in that** the housing (2), made up of the cover (4), the bottom (7) and the side walls (5, 6), is configured in one piece.

9. Detent element (1) according to claim 1, **characterised in that** the housing (2) is made out of sheet metal parts without chip removal by a shaping method.

10. Detent element (1) according to claim 1, **characterised in that** the housing (2) is made out of a plastic material.

## Revendications

1. Elément (1) d'arrêt pour l'encliquetage de deux éléments de transmission dans au moins une position, ledit élément (1) d'arrêt comprenant un boîtier (2) qui est agencé dans un premier élément de transmission et dans lequel boîtier (2) sont prévus un élément ressort (3) et un corps (15) d'arrêt, l'élément ressort (3) étant précontraint contre un second élément de transmission et sollicitant le corps (15) d'arrêt par une force sensiblement en travers d'une direction de mouvement des deux éléments de transmission, **caractérisé en ce que**
- le boîtier (2) avec un fond (7), un couvercle (4) et au moins deux premières parois latérales (5) a une configuration sensiblement cuboïde,
- les premières parois latérales (5) sont parallèles, l'une à l'autre, et sont orientées le long de la direction de pression (17),
- le couvercle (4) relie les bords supérieurs des deux premières parois latérales (5), est situé en travers de la direction de pression (17) et est muni d'une ouverture (9),
- le fond (7) est attaché aux extrémités inférieures des premières parois latérales (5), s'étend, au moins partiellement, entre ces parois et est situé en travers de la direction de pression (17),
- l'élément ressort (3) est configuré sous la forme d'un ressort à lames
- qui se supporte sur le fond (7) et sur le couvercle (4) du boîter, et
- le corps (15) d'arrêt est configuré d'un seul tenant avec l'élément (3) d'arrêt et s'étend au travers de l'ouverture (9) dans le couvercle (4) du boîtier (2).

2. Elément (1) d'arrêt selon la revendication 1, **caractérisé en ce que** l'élément (3) ressort comprend trois sections (10, 11, 12) planiformes, la première et la troisième section (10, 12) s'étendent en travers de la direction de pression (17) et s'appuient respectivement contre le fond (7) et contre le couvercle (4) du boîtier (2), pendant que la seconde section (11) s'étend en direction de pression (17), s'appuie contre l'une des premières parois latérales (15) et relie les autres sections (10, 12), l'une à l'autre.

3. Elément (1) d'arrêt selon la revendication 2, **caractérisé en ce que**, une quatrième section (13) de l'élément (3) ressort s'étend à partir de l'extrémité libre de la première section (10) en direction de la troisième section (12), s'appuie contre celle-ci et la sollicite par une force en direction de pression (17).

4. Elément (1) d'arrêt selon la revendication 1, **caractérisé en ce que** l'élément (3) ressort est composé d'une première (10), d'une troisième (12) et, au moins, d'une cinquième section (36), la première et la troisième section (10, 12) s'étendent en travers de la direction de pression (17) et s'appuient respectivement contre le fond (7) et le couvercle (4) du boîtier (2), et les cinquièmes sections planiformes (36) sont agencées entre celles-ci de telle façon que l'élément (3) ressort a une configuration en forme d'accordéon.

5. Elément (1) d'arrêt selon la revendication 1, **caractérisé en ce que** plusieurs éléments ressort sont montés en ligne.

6. Elément (1) d'arrêt selon la revendication 1, **caractérisé en ce que** le corps (15) d'arrêt est configuré sous la forme d'une convexité (14) hémisphérique dans l'élément (3) ressort.

7. Elément (1) d'arrêt selon la revendication 1, **caractérisé en ce que** le boîtier (2) est muni de deux secondes parois latérales (6) qui sont agencées parallèlement, l'une à l'autre, qui sont perpendiculaires au fond (7) et aux premières parois latérales (5) et qui s'étendent à partir des bords du couvercle (4), au moins, partiellement en direction du fond (7).

8. Elément (1) d'arrêt selon la revendication 1, **caractérisé en ce que** le boîtier (2), composé du couvercle (4), du fond (7) et des parois latérales (5, 6), est configuré en une seule pièce.

9. Elément (1) d'arrêt selon la revendication 1, **caractérisé en ce que** le boîtier (2) est fabriqué de pièces en tôle sans enlèvement de copeaux par une méthode de formage.

10. Elément (1) d'arrêt selon la revendication 1, **caractérisé en ce que** le boîtier (2) est fabriqué en matière synthétique.
